(19) Europäisches Patentamt
European Patent Office
Office européen des brevets

(11) **EP 3 822 228 A1**

(12) **EUROPEAN PATENT APPLICATION**

(43) Date of publication:
**19.05.2021 Bulletin 2021/20**

(51) Int Cl.:
***C02F 1/44*** *(2006.01)*     ***B01D 61/02*** *(2006.01)*
***B01D 61/06*** *(2006.01)*     ***C02F 103/08*** *(2006.01)*

(21) Application number: **20204281.8**

(22) Date of filing: **28.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.11.2019 KR 20190146416**
              **01.04.2020 KR 20200039573**

(71) Applicant: **Korea University Research and Business Foundation**
**Seoul 02841 (KR)**

(72) Inventors:
- **HONG, Seung-Kwan**
  **16951 Gyeonggi-do (KR)**
- **KIM, Jung-Bin**
  **06697 Seoul (KR)**

(74) Representative: **Scheele Wetzel Patentanwälte**
**Bayerstraße 83**
**80335 München (DE)**

(54) **DESALINATION APPARATUS FOR HIGH-SALINE WATER**

(57) The present invention relates to a desalination apparatus for high-saline water comprising: a first stage module into which raw water is introduced as a first inflow water and which treats the first inflow water by a reverse osmosis process to discharge a first product water and a first concentrate water; a second stage module into which a second inflow water that is a mixture of the raw water and the first concentrate water is introduced and which treats the second inflow water by a reverse osmosis process to discharge a second product water and a second concentrate water; and a pressure exchanger which increases pressure of the raw water that will be mixed with the first concentrate water by pressure of the second concentrate water; wherein a ratio of the number of pressure vessels constituting the first stage module to the number of pressure vessels constituting the second stage module is in the range of 6:9 to 9:16.

[FIG. 2]

**Description**

**CROSS REFERENCE TO RELATED APPLICATION**

The present application claims priority to Korean Patent Application No. 10-2020-0039573, filed April 1, 2020, the entire contents of which is incorporated herein for all purposes by this reference.

**BACKGROUND OF THE INVENTION**

**Field of the Invention**

The present invention relates to a desalination apparatus for high-saline water, in particular a desalination apparatus for high-saline water capable of increasing quality and quantity of the product water during the treatment of high-saline inflow water such as sea water and reducing load of the entire process, thereby increasing energy efficiency.

**Description of the Related Art**

Recently, water deficit problem occurs all over the world. About 97% of water on earth is sea water and the remaining fresh water is not sufficient for humans use. Also, climate crisis, desertification, water pollution, etc. worsen the water shortage. For example, it is reported that NIC (National Intelligence Council) in the States reported that more than 3 billion people corresponding half the population in the entire world will live in countries having water shortage in 2015 and WMO (World Meteorological Organization) expects that six hundred and fifty three million to six hundred and four million people will experience water shortage problem in 2025 and 2.43 billion people will experience water shortage problem in 2050.

To solve the water shortage problem, use of bank-filtered water or underwater, rainmaking, etc. are suggested, but desalination of sea water which is infinite resource is emerged as the most practical way to solve essential problems.

Desalination of sea water or desalination of saline-water (hereinafter referred to as desalination of sea water) means that the fresh water is obtained by removing salinity from sea water containing salinity.

Ways to perform desalination of sea water are evaporation method using water evaporation phenomenon, membrane filtering method using the discrimination and selective permeation of the membrane, etc. and the membrane filtering method is classified into RO (reverse osmosis) and electrodialysis.

In particular, water treatment method using reverse osmosis is a way to extract fresh water by arranging a semipermeable membrane therebetween and applying reverse osmosis pressure which is higher than osmosis pressure to sea water. The reverse osmosis method is widely being used since it consumes less energy than the evaporation method and easy to control. For example, Korean patent 10-1853214 discloses 'a water treatment apparatus using reverse osmosis'.

However, places requiring the desalination apparatus mostly have high salinity of inflow water and high temperature. In this water condition, the amount of water obtained by the normal reverse osmosis apparatus is very limited. In other words, a recovery rate is low. Also, salinity of product water is high since water is produced from high-saline inflow water.

Process of desalination from high-saline sea water is generally carried out by pressure-driven SWRO process and it uses hydraulic pressure which is higher than osmosis pressure of inflow water. When hydraulic pressure of inflow water exceeds osmosis pressure, salinity is removed and then fresh water is produced through a SWRO membrane.

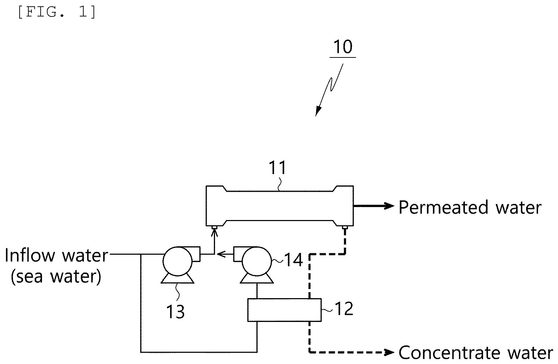

Fig. 1 shows an example of structures of a single stage SWRO system of prior art. As shown in Fig. 1, the single stage SWRO system comprises a SWRO module and a pressure exchanger. Raw water such as sea water is introduced into SWRO module as inflow water by high pressure pump. The SWRO module treats the inflow water through the reverse osmosis process and discharges product water and concentrate water. Pressure exchanger increase pressure of diverged raw water by using hydraulic pressure of the concentrate water and then mixes the diverged raw water with raw water discharged from the high pressure pump to introduce it as inflow water of the SWRO module. Reference number 14 in Fig. 1 indicates a booster pump.

The recovery rate of the normal single stage SWRO system is less than 50% due to the osmosis pressure of sea water. If high pressure is applied for the high recovery rate, a large amount of water is produced from a SWRO element at the front end, i.e., pressure vessel (hereinafter referred to as 'PV') and the osmosis pressure of the inflow water at the rear end exceeds its hydraulic pressure, resulting in no more production of fresh water.

To increase the recovery rate of SWRO system, a two stage design was developed and it is configured to introduce concentrate water of the first stage SWRO module into the second stage SWRO module, thereby producing more amount of fresh water.

For a normal two stage SWRO system, a ratio of the number of PV of the first stage SWRO module to the number of PV of the second stage module is 2:1 and it is similar to a NF (nanofiltration) and BWRO (brackish water reverse osmosis) system. When two stage SWRO system is used, the gradual increase of pressure of inflow water exceeding osmosis pressure allows fresh water to be produced at each stage SWRO module, which increases the recovery rate to 60% to 65%. Increased recovery rate allows the reduction of the plant size, in particular the reduction of the size of an inlet portion and a pretreatment portion, thereby enabling the reduction of construction cost and operation cost. Meanwhile, since the application of the two stage SWRO system requires higher pressure than the single stage SWRO system, it is not being used generally.

Hence, several SWRO desalination plants constructed a two stage SWRO system having a high recovery rate operation. For the overall SWRO desalination plant to which the two stage SWRO system, the second stage SWRO module is added to the first stage SWRO module in order to increase a plant capacity. Such two stage SWRO system increased the recovery rate to 50 to 60% and the necessary hydraulic pressure (70 to 90 bar) depends on the recovery rate.

Due to extremely high pressure of inflow water at the second stage SWRO module, devices having resistance to high pressure should be installed. This increases equipment costs compared to the operations under normal pressure. Also, the installation of additional stage and other equipment increases cost of capital. Moreover, specific energy consumption (SEC) the two stage SWRO system is high due to the high recovery rate. Since desalination business recently focuses on SEC rather than high recovery rate, current SWRO desalination plant generally use a single stage instead of two stages.

Recently, theoretical study reveals that stage RO structure is able to decrease SEC of SWRO to energy close to the theoretical minimum energy. This is because the two stage RO makes possible to deliver high pressure to a small volume of inflow water in each stage. Advantages of the stage SWRO design for SEC was examined when the system is compared to single-stage SWRO at the same recovery (40%) unlike the real application of two-stage (60%). Theoretical background supports the advantages of the two stage at low SEC and enables wide application of the two stage SWRO in the current desalination business.

However, the above study does not fully support that the suggested two stage SWRO can be realized over the single stage SWRO. In fact, theoretical study focused only the energy consumption and did not consider more practical perspective of SWRO such as quality of fresh water or other operation issues. Moreover, when SEC is compared, the number of PV of the two stage RO is higher than the number of PV of the single stage RO, which is due to the status of other equipment. Additionally, the evaluated SEC was not optimized since the flow rate and the number of PV were determined without the optimized consideration, but PV was arranged in a ratio of 2:1 based on experience. In other words, the average flow rate and recovery rate at each stage were not determined systemically. Regarding the calculation of SEC, by the application of a thermodynamic model and a simple RO model, the two stage SWRO cannot be realized.

**Disclosure**

**Technical Problem**

Accordingly, the present invention is provided to solve the above problems. The object of the invention is to provide a desalination apparatus for high-saline water capable of increasing quality and quantity of the product water, reducing load of the entire process and increasing energy efficiency, when two stage RO process is applied for the treatment of high-saline inflow water such as sea water.

**Technical Solution**

The above object is accomplished by a desalination apparatus for high-saline water comprising: a first stage module into which raw water is introduced as a first inflow water and which treats the first inflow water by a reverse osmosis process to discharge a first product water and a first concentrate water; a second stage module into which a second inflow water that is a mixture of the raw water and the first concentrate water is introduced and which treats the second inflow water by a reverse osmosis process to discharge a second product water and a second concentrate water; and a pressure exchanger which increases pressure of the raw water that will be mixed with the first concentrate water by pressure of the second concentrate water; wherein a ratio of the number of pressure vessels constituting the first stage module to the number of pressure vessels constituting the second stage module is in the range of 6:19 to 9:16.

Here, total recovery rate of the first stage module and the second stage module may be set in a range of 45% to 55%.

Also, the desalination apparatus may further comprise a third stage module into which the first product water is introduced as a third inflow water, the third stage module being configured to treat the third inflow water by a reverse osmosis process to discharge a third product water and a third concentrate water, wherein the second product water and the third product water are discharged as final product water.

Also, the desalination apparatus may further comprise a third stage module into which the second product water is introduced as a third inflow water, the third stage module being configured to treat the third inflow water by a reverse osmosis process to discharge a third product water and a third concentrate water, wherein the first product water and the third product water are discharged as final product water.

Also, the third concentrate water may be mixed with the raw water to dilute the raw water.

Also, brackish water reverse osmosis (BWRO) may be applied to the third stage module.

Moreover, the above object may be also accomplished by a desalination apparatus for high-saline water according to another embodiment of the invention comprising: a first stage module into which raw water is introduced as a first inflow water and which treats the first inflow water by a reverse osmosis process to discharge a first product water and a first concentrate water; a second stage module into which the first concentrate water is introduced as a second inflow water and which performs reverse osmosis for the second inflow water to discharge a second product water and a second concentrate water; and a Pelton turbine which generates electric power by means of the second concentrate water; wherein a ratio of the number of pressure vessels constituting the first stage module to the number of pressure vessels constituting the second stage module is in the range of 57:43 to 61:39.

Here, a total recovery rate of the first stage module and the second stage module may be set in a range of 55% to 70%.

Also, seawater reverse osmosis (SWRO) may be applied to the first stage module and the second stage module.

Also, the ratio of the number of pressure vessels constituting the first stage module to the number of pressure vessels constituting the second stage module is set depending on a predetermined total recovery rate of the first stage module and the second stage module.

**Advantageous Effects**

According to the above arrangement, for high saline inflow water such as sea water, the present invention provides a desalination apparatus for high-saline water capable of increasing quantity of fresh water, i.e., product water and reducing salinity.

Also, according to the present invention, a desalination apparatus for high-saline water capable of increasing quality and quantity of the product water, reducing load of the entire process and increasing energy efficiency is provided.

Also, according to the present invention, a desalination apparatus for high-saline water capable of decreasing membrane contamination during reverse osmosis process even in water condition of high salinity, thereby reducing exchange cycle of membrane is provided.

**Description of Drawings**

Fig. 1 shows an example of configuration of a single stage SWRO system of prior art.

Fig. 2 shows configuration of a desalination apparatus for high-saline water according to the first embodiment of the present invention.

Fig. 3 shows configuration of a desalination apparatus for high-saline water according to the second embodiment of the present invention.

Figs. 4 to 11 represent theoretical and experimental effects for the desalination apparatus for high-saline water according to the first and second embodiments of the present invention.

Fig. 12 shows configuration of a desalination apparatus for high-saline according to the third embodiment of the present invention.

Fig. 13 shows configuration of a desalination apparatus for high-saline according to the fourth embodiment of the present invention.

**Description**

Hereinafter, embodiments for the invention will be described referring to the attached drawing.

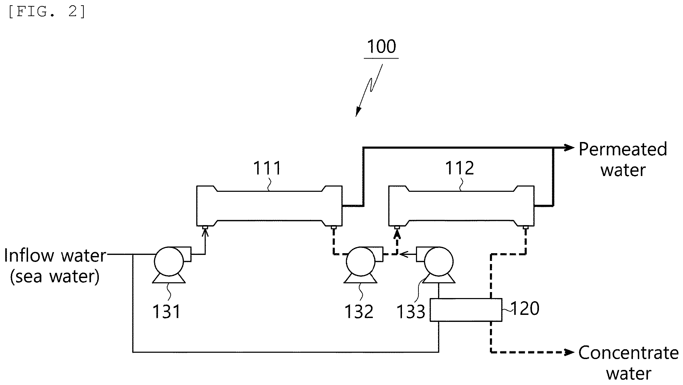

Fig. 2 represents a structure of a desalination apparatus for high-saline water 100 according to the first embodiment of the present invention. Referring to Fig. 2, the desalination apparatus for high-saline water 100 according to the first embodiment of the present invention comprises a first stage module 111, a second stage module 112, and a pressure exchanger 120.

Raw water which is a first inflow water is introduced into the first stage module 111. Here, raw water is introduced into the first stage module 111 by means of a high pressure pump 131. The first stage module 111 carries out a reverse osmosis process for the first inflow water to discharge a first product water (permeated water) and a first concentrate water.

A second inflow water which is a mixture of raw water and the first concentrate water is introduced into a second stage module 112. The second stage module 112 carries out a reverse osmosis process for the second inflow water to discharge a second product water and a second concentrate water. Here, a pressure exchanger 120 uses pressure of the second concentrate water to increase pressure of raw water which is not yet mixed With the first concentrate water.

According to the first embodiment, the first product water from the first stage module 111 and the second product water from the second stage module 112 are produced as final product water.

Each of the first stage module 111 and the second stage module 112 consists of a plurality of pressure vessel. In an example, the ratio of the number of the pressure vessels of the first stage module 111 to the number of the pressure vessels of the second stage module 112 is in the range of 6:9 to 9:16. Also, the apparatus is operated such that the total recovery rate of the first stage module 111 and the second stage module 112 is set to be in the range of 45% to 55%.

Also, in Fig. 2, reference numbers 132 and 133 which were not explained indicate a booster pump.

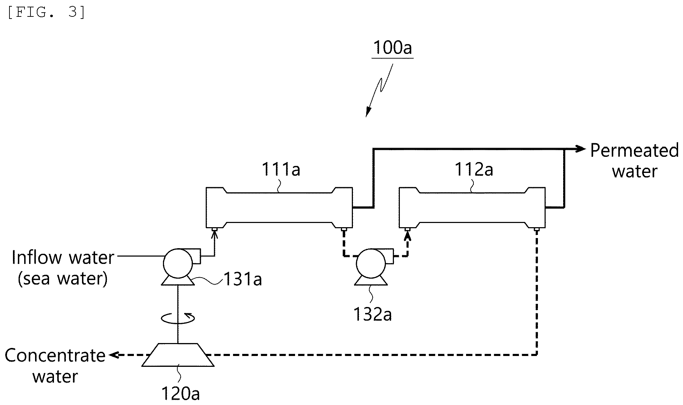

Fig. 3 shows a structure of a desalination apparatus for high-saline water 100a according to the second embodiment of the present invention. Referring to Fig. 3, the desalination apparatus for high-saline water 100a according to the second embodiment of the present invention comprises a first stage module 111a, a second stage module 112a, and a Pelton turbine 120a.

Raw water which is a first inflow water is introduced into the first stage module 111a. Here, raw water is introduced into the first stage module 111a by means of a high pressure pump 131a. The first stage module 111a carries out a reverse osmosis process for the first inflow water to discharge a first concentrate water.

The first concentrate water is introduced into the second stage module 112a as a second inflow water. The second stage module 112a carries out a reverse osmosis process for the second inflow water to discharge a second product water and a second concentrate water.

According to the second embodiment, the first product water from the first stage module 111a and the second product water from the second stage module 112a are combined to be final product water.

The Pelton turbine 120a generates an electric power using hydraulic pressure of the second concentrate water and uses the electric power for the desalination apparatus for high-saline water 100a according to the second embodiment of the present invention, thereby enhancing energy efficiency.

Here, each of the first stage module 111a and the second stage module 112a consists of a plurality of pressure vessel. In an example, the first stage module and the second stage module are arranged such that the ratio of the number of the pressure vessels of the first stage module 111a to the number of the pressure vessels of the second stage module 112a is in the range of 57:43 to 61:39. Also, the apparatus is operated such that a recovery rate of the second product water produced by the second stage module 112a, i.e., the total recovery rate, is set to be in the range of 45% to 55%.

In Fig. 3, reference numbers 132a which was not explained indicate a booster pump.

In the first and second embodiments, to deal with the high saline. SWRO (Seawater Reverse Osmosis) may be applied to the first stage module 111, 111a and the second stage module 112, 112a

Also, the ratio of the number of pressure vessels consisting the first stage module 111, 111a to the number of pressure vessels consisting the second stage module 112, 112a is determined depending on the total recovery rate of the product water produced by the first stage module 111, 111a and the second stage module 112, 112a.

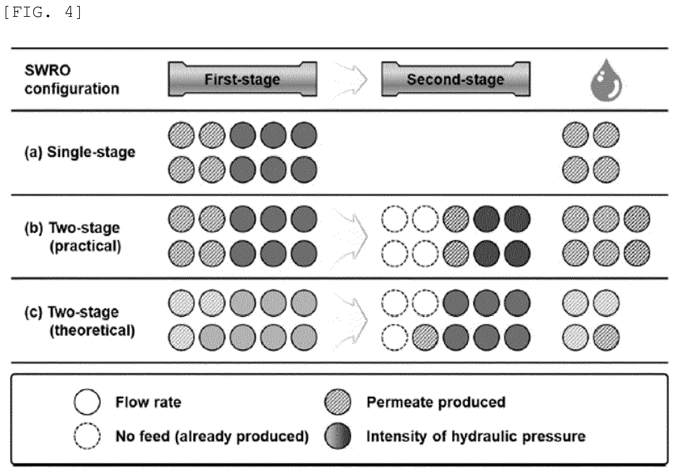

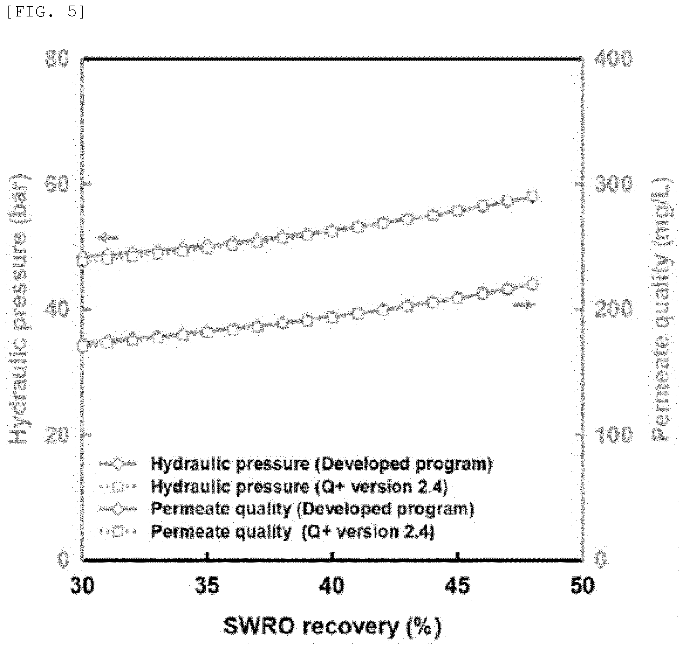

Hereinafter, referring to Figs. 4 to 11, theoretical and experimental effects for the desalination apparatus for high-saline water 100, 100a according to the first and second embodiments of the present invention will be described.

As shown in Fig. 1, in case of a single stage SWRO system 10 of prior art, assuming that about 40% of the inflow rate is converted into permeated water, i.e., product water, the recovery rate will be 40% as can be seen in Fig. 4(a). In order to increase the recovery rate, like the general two stage SWRO system 100, 110a, if the second stage module 112, 112a is added to the ordinary single stage SWRO system 10 as shown in Fig. 4(b), the system is defined as a two stage SWRO system 100, 110a and the total recovery rate can reach 60% (40% of the first stage module and 20% of the second stage module).

Here, the recovery rate of the two stage SWRO system 100, 100a as shown in Fig. 4(b) is higher than that of the single stage SWRO system 10 as shown in Fig. 4(a) and it causes energy consumption of the two stage SWRO system 100, 100a. Unlike the two stage SWRO system 100, 100a in the practical use, the two stage SWRO system 100, 100a in a theoretical study operates with 40% recovery rate as shown in Fig. 4(c). When the single stage SWRO system 10 of Fig. 1(a) has the same recovery rate as the two stage SWRO system 100, 100a of Fig. 1(b), it can be asserted that the two stage SWRO system 100, 110a consumes less energy than the single SWRO system 10. Accordingly, as described above, when the two stage SWRO system 100, 100a is applied to the desalination apparatus for high-saline water 100, 100a of the present invention, experiment focuses on the feasibility and is carried out based on the practical design perspective. In the experiment, general sea water having 35,000 mg/L at 25°C is used as raw water for the simulation. In order to focus the effect of the stage RO design without considering the internally staged design (ISD), a single type SWRO membrane which is SW400R produced by LG chemical Ltd. is used. Water permeability (A) of 1.52 L/m$^2$h bar and salt permeability of 5.20x10$^{-2}$ L/m$^2$h were obtained. Pump efficiency of the high pressure pump (HPP) 131, 131a and the booster pump (BP) is 80%.

Considering the practical application of the two stage SWRO which uses Pelton turbine 120a (hereinafter referred to as PT) as the energy recovery device as in the second embodiment, the efficiency of PT is given with 95% and 90%, respectively. The performance of SWRO process is evaluated based on the solution-diffusion model as shown in [Formula 1] and [Formula 2].

[Formula 1]

$$J_w = A\left[(P_f - P_p) - \left(CPF \times \pi_f - \pi_p\right)\right]$$

[Formula 2]

$$J_s = B(CPF \times C_f - C_p)$$

Here, $J_w$ is a water flux, $J_s$ is a salt flux, $P_f$ is a hydraulic pressure of inflow water, $P_p$ is a hydraulic pressure of permeated water, $CPF$ is a concentration polarization factor, $\pi_f$ is an osmotic pressure of inflow water, $\pi_p$ is an osmotic pressure of permeated inflow water, $C_f$ is a salinity of inflow water, $C_p$ a salinity of permeated water, $A$ is a water permeability, and $B$ is a salt permeability.

The program for the simulation provided a high accuracy ($R^2 = 0.9998$) with the result estimated from a program Q+ version 2.4 provided by a membrane manufacturing company, and the maximum differences in the pressure and the permeate quality provided in the range of the recovery rate were 0.7 bar and 2 mg/L, respectively. If the operating condition violates design values recommended by the manufacturing company (e.g., hydraulic pressure > 82.7 bar, pressure drop > 1.0 bar, supply water flow > 408 m³/d, water permeation > 32.3L/m²h), the program provides a warning sign which is indicated by red dots in the figure.

Permeation quality $Q_{p,system}$ and SWRO system quality $C_{p,system}$ are evaluated by [Formula 3] and [Formula 4] which are the integration of [Formula 1] and [Formula 2] along a membrane area $A_m$. [Formula 5] to [Formula 7] are applied for the output of the energy consumption of the SWRO system 10 which depends on the structure. $E_{w,single}$ represents energy consumption of the single stage SWRO system 10, and $E_{w,two\_PX}$ represents energy consumption of the two stage SWRO system 100 to which the pressure exchanger 120 (hereinafter referred to as PX) is applied, i.e., energy consumption of the desalination apparatus for high-saline water 100 according to the first embodiment of the present invention. $E_{w,two\_PT}$ represents energy consumption of the two stage SWRO system 100a to which PT is applied, i.e., energy consumption of the desalination apparatus for high-saline water 100a according to the second embodiment of the present.

Flow rate of the inflow water and the concentrate water is represented by $Q_f$ and $Q_c$, respectively, and subscripts 1 and 2 indicate the first stage module 111, 111a and the second stage module 112, 112a, respectively. Pressure of stream of each stage module is expressed similarly, and pressure $P_{in}$ at the inlet of the SWRO system and pressure $P_{out}$ at the outlet are given as 1 bar.

Also, mechanical efficiency of the electric motor $\eta_{motor}$ is 98%,
The mechanical efficiency $\eta_{HPP}$ of pump including a high pressure pump 131 and the mechanical efficiency $\eta_{BP}$ of pump including a boost pump are 95% in a basic condition, but $\eta_{PT}$ of 90% is applied to some experiment which will be described later. Specific energy consumption (hereinafter referred to as SEC) is calculated by [Formula 8].

[Formula 3]

$$Q_{p,system} = \int_{x=0}^{x=L} J_w \, dA_m$$

[Formula 4]

$$C_{p,system} = \frac{\int_{x=0}^{x=L} J_s dA_m}{\int_{x=0}^{x=L} J_w dA_m}$$

[Formula 5]

$$E_{w,single} = \frac{(Q_{f,1}-Q_{c,1})(P_{f,1}-P_{in})}{\eta_{motor}\eta_{HPP}} + \frac{Q_{c,1}\left[(P_{f,1}-P_{in})-\eta_{PX}(P_{c,1}-P_{out})\right]}{\eta_{motor}\eta_{BP}}$$

[Formula 6]

$$E_{w,two\_PX}$$

$$= \frac{Q_{f,1}(P_{f,1}-P_{in})}{\eta_{motor}\eta_{HPP}} + \frac{(Q_{f,2}-Q_{c,2})(P_{f,2}-P_{c,1})}{\eta_{motor}\eta_{BP}} + \frac{Q_{c,2}\left[(P_{f,2}-P_{in})-\eta_{PX}(P_{c,2}-P_{out})\right]}{\eta_{motor}\eta_{BP}}$$

[Formula 7]

$$E_{w,two\_PT} = \frac{Q_{f,1}(P_{f,1}-P_{in})}{\eta_{motor}\eta_{HPP}} + \frac{Q_{f,2}(P_{f,2}-P_{c,1})}{\eta_{motor}\eta_{BP}} - \frac{Q_{c,2}\left[\eta_{PT}(P_{c,2}-P_{out})\right]}{\eta_{motor}\eta_{BP}}$$

[Formula 8]

$$SEC_{system} = \frac{E_{w,system}}{Q_{p,system}}$$

SWRO system is designed with a capacity of 100,000 $m^3$/d and 1200 PVs are installed such that each PV maintains an average water permeability of 13.35L/$m^2$h. For two stage SWRO system 100, 100a, even when the number of PV is the same as that of the single stage SWRO system 10, both 1200 PVs and 1800 PVs are considered. However, the permeate flow rate for each stage and the number of PV are determined to evaluate the performance of the two stage SWRO system 100, 100a in such a way to minimize energy consumption.

Therefore, the objective function of harmony search and constraint condition are given as [Formula 9] and [Formula 10].

[Formula 9]

*Minimize SEC = f(PV numbers (1st), Permeate flow rate (1st), PV numbers (2nd),*

*Permeate flow rate (2nd))*

[Formula 10]

*Subject to*

$5 \leq PV$ *numbers (1st)* $\leq 1200$ *(or 1800)*

$1000 \leq Permeate$ *flow rate (1st)* $\leq 100000$

*PV numbers (1st) + Permeate flow rate (2nd) = 1200 (or 1800)*

*Permeate flow rate (1st) + Permeate flow rate (2nd) = 100000*

Since objective function is uncontinuous and non-differentiable, optimal decision variable is very complicated to use a common optimization technique and thus, the harmony search as metaheuristic algorithm is applied in order to find efficiently decision variables having the balance between diversification and intensification.

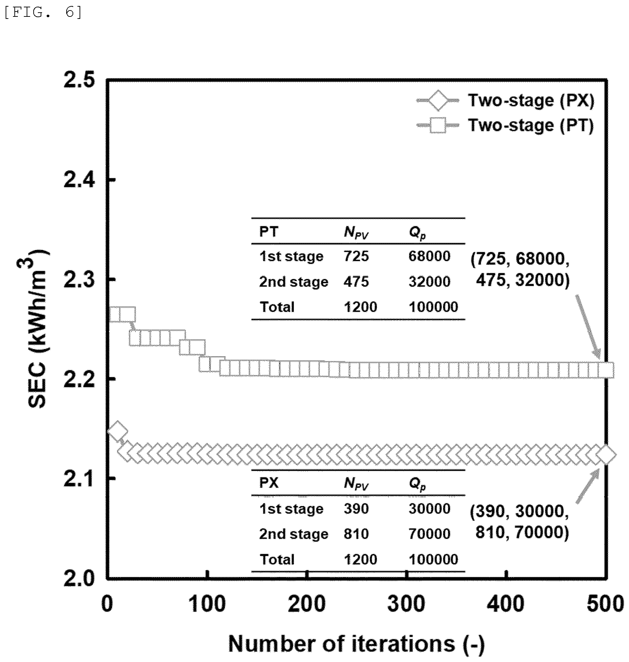

In the present invention, best decision variables can be obtained within 500 iterations (see Fig. 6), the harmony search algorithm can reduce iteration time compared to standard calculation time (24000) required for the optimization. Parameters used for the harmony search are shown in [Table 1].

[Table 1]

Parameters used in the harmony search (HS).

| Parameters | Value |
|---|---|
| Harmony memory size (HMS) [-] | 10 |
| Bandwidth (BW) for permeate flow rate [m$^3$/d] | 1000 |
| Bandwidth (BW) for PV numbers [-] | 5 |
| Harmony memory considering rate (HMCR) [-] | 0.7 |
| Pitch adjusting rate (PAR) [-] | 0.3 |

The number of PV in the prior-art two stage SWRO system is 1.5 times more than the number of PV in a single stage SWRO system 10 since half the number of the first stage module 111, 111a is added to the second stage module 112, 112a. However, the possibility of RO design can be evaluated fairly only when the number of PV (or membrane) is the same. Therefore, SEC of the single stage SWRO system and SEC of the two stage SWRO system 10, 100, 100a are compared when the number of PV is 1.5 times more and when the number of PV is the same, respectively. SEC is evaluated by using an optimal ratio for each case.

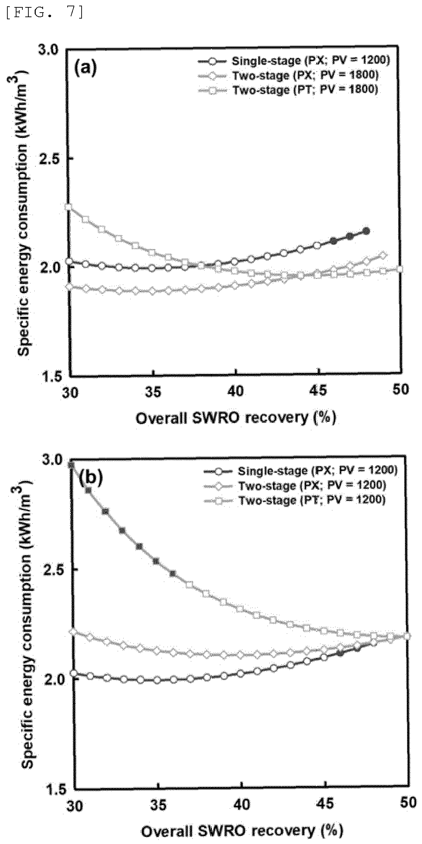

In Fig. 7 (a), two stage SWRO system 100, 100a consumes less energy than a single stage SWRO system 10 in the range of a typical recovery rate of SWRO. SEC of a single stage SWRO system 10 is 1.99 to 2.15 kWh/m$^3$ and the lowest SEC is shown at the recovery rate of 38%. Meanwhile, as in the first embodiment of the present invention, during the production of permeated water, a two stage SWRO system 100 to which PX is applied consumed 1.89-2.04 kWh/m$^3$ which is less than SEC of the single stage system in the entire range of recovery rate. However, as in the second embodiment of the present invention, SEC of the two stage SWRO system 100a to which PT is applied has significantly changed from 2.28 kWh/m$^3$ to 1.95 kWh/m$^3$ depending on the recovery rate and the two stage SWRO system 100a to which PT was applied has higher efficiency than the single stage SWRO system 10 at the recovery rate of more than 38%. Considering SWRO plant operating in the range of 40% to 45%, the two stage SWRO system 100a can be obtained for the typical SWRO recovery rate.

But, when the number of PV is the same, the SEC required for the operation of the two stage SWRO system 100, 100a is higher than the SEC required for that of the single stage SWRO system 10, which can be seen in the Fig. 7(b). For the single stage SWRO system 10, SEC does not change since the same condition is applied to the system. Meanwhile, for the two stage SWRO system 100, 100a, SEC increases when PVs having the same number as the single stage SWRO system 10 are installed, as can be seen in Fig. 7(b). The two stage SWRO system 100, 100a to which PX and PT are applied indicates 2.10-2.22 kWh/m$^3$ and 2.97-2.18 kWh/m$^3$, respectively, and thus the two stage SWRO system 100, 100a consumed more energy than the single stage SWRO system 10 in the range of given recovery rate. Such result is not in accordance with the assertion that the two stage structure is more efficient than the single stage structure. In fact, when the number of PV of the two stage SWRO system 100, 100a is the same as the number of PV of the single stage SWRO system 10, the average water permeability remains the same. Meanwhile, the previous theoretical study focuses only the calculation of SEC without considering RO design such as an average water permeability. Therefore, the two stage SWRO system 100, 100a is not profitable in terms of energy consumption in the recovery rate of about 30% as described above.

Meanwhile, the optimal recovery rate which minimizes SEC is influenced by other design factors. Particularly, a high feed flow rate for the stage caused by design results in the increase of the optimal recovery rate. In the two stage SWRO system 100 to which PX is applied, initial fresh feed is supplied to the first stage module 111 and the second stage module 112, respectively, and as can be seen in Fig. 2, the second stage module 112 has inflow water which is the sum of the concentrate water of the first stage module 111 and the initial inflow water.

Since the initial inflow water is divided and supplied to the respective stage module, the feed flow rate for each stage module is not that high compared to the single stage. Therefore, as shown in Fig. 7 (b), the optimal recovery rate of 40% relatively approaches 38% of the single stage. Meanwhile, in the two stage SWRO system 100a to which PT is applied, all the inflow water is supplied to the first stage module 111a and the concentrate water of the first stage module 111a is supplied to the second stage module 112a. However, in the two stage SWRO system 100a to which PT is applied, the first stage module 111a has PV whose number is similar to the number of PV of the single stage and the feed flow rate of the first stage module 111a is large. For the two stage SWRO system 100a to which PT is applied, the first stage module 111a produces a much more amount of permeated water than the second stage module 112a, thereby the optimal recovery rate is more than 50% and is higher than the single stage SWRO system 10. (see Fig. 7 (b))

When more membranes are installed, the two stage SWRO system 100, 100a consumes less energy than the single SWRO system 10. But, when membranes having the same number are used, there is no possibility exceeding the single stage SWRO system 10.

In other words, the arrangement of the two stage SWRO system 100, 100a does not have less energy consumption in the range of the recovery rate of the previous SWRO system. Also, the optimal recovery rate differs depending on the design of the SWRO and the optimal recovery rate of the two stage SWRO system 100a having PT is higher than the recovery rate of the previous SWRO system. Therefore, the two stage SWRO system 100, 100a can be realized at the recovery rate higher than the previous SWRO, which will be described later.

Meanwhile, the permeation quality is an important factor for the operation of the SWRO system since it is a criterion for the usability of water. Because the permeation quality depends on the water permeation quantity, it is important to determine the average water permeation quantity for the SWRO system. If the permeate flow rate and PV water quantity are set to be the same for all systems, the average water permeation quantity for the single stage SWRO system 100 is immediately determined, but the water permeation quantity for the two stage SWRO system 100, 100a differs for each stage. Such profile is important since it affects permeation quality of the entire system.

Also, a high-flux operation has weakness as to fouling formation at the membrane, which weakens the performance. Therefore, the permeation quality and the average water permeation quantity for the two stage SWRO system 100, 100a are examined.

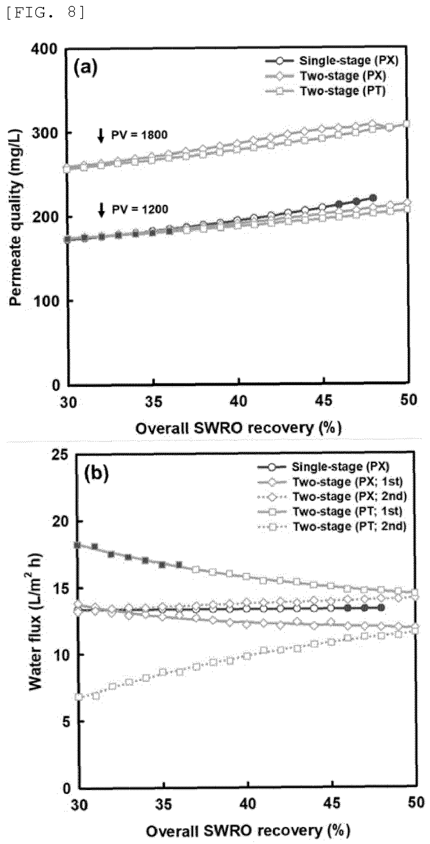

Permeation quality is determined by the average water permeation quantity of the entire SWRO system, not by the average water permeation quantity of each stage. Referring to Fig. 8(a), if 1800 PVs are applied to the two stage SWRO system 100, 100a, the permeation quality of the two stage SWRO system is lower than that of the single stage SWRO system 10 to which 1200 PVs are applied. However, the same amount of permeate water is generated from PV having the same number (average water permeate quantity - 13.35 L/m$^2$h), the permeation quality of the single stage SWRO system 10 in the range of the recovery rate of 30% to 50% is 173-220 mg/L and the permeation quality of the two stage SWRO system 100, 100a to which PX and PT was applied is 174-214 mg/L and 174-206mg/L, respectively. Here, each stage of the two stage SWRO system 100, 100a generates permeate water having different quality, but the permeation quality of the total permeate water (permeate water of the first stage and permeate water of the second stage) from the two stage SWRO system 100, 100a is similar to the permeation quality of the singe stage SWRO system 10 and little bit better. This reflects that the permeation quality is affected by average water permeate quantity of SWRO system regardless of each stage or RO design.

While the two stage SWRO system 100a having PT operates with non-uniform average water permeation quantity for each stage, the two stage SWRO system 100 having PX provides similar average water permeation quantity for each stage. For the two stage SWRO system 100 having PX, inflow water is divided and supplied to each stage and as shown in Fig. 8(b), each stage can operate with similar average water permeation quantity (13.81~11.9220.93 L/m$^2$h). With the increase of recovery quantity, the first stage module 111 produces water with low water permeation quantity and the second stage module 112 produces water with high water permeation quantity (13.20~14.15 L/m$^2$h). In this regard, the difference of water permeation quantity increases but the difference is still small. Due to the uniform average water permeation quantity, each stage operates similarly without violating design requirements.

Meanwhile, for the two stage SWRO system 100a having PT, the first stage module 111a always operates with higher water permeation quantity than the second stage module 112a. The average water permeation quantity of the first stage module 111a is of 18.24~14.48 L/m$^2$h and the average water permeation quantity of the second stage module 112a is 6.84~11.59 L/m$^2$h with the increase of the recovery rate. Since the first stage module 111a operates with very high average water permeation quantity with regard to SWRO, it violates the design requirements in the low recovery rate of 30~36%. However, the second stage module 112a reduces the burden of the first stage module 111a by producing water with high water permeation quantity and thus, SWRO system operates in a stable way at the recovery rate of 37% and more.

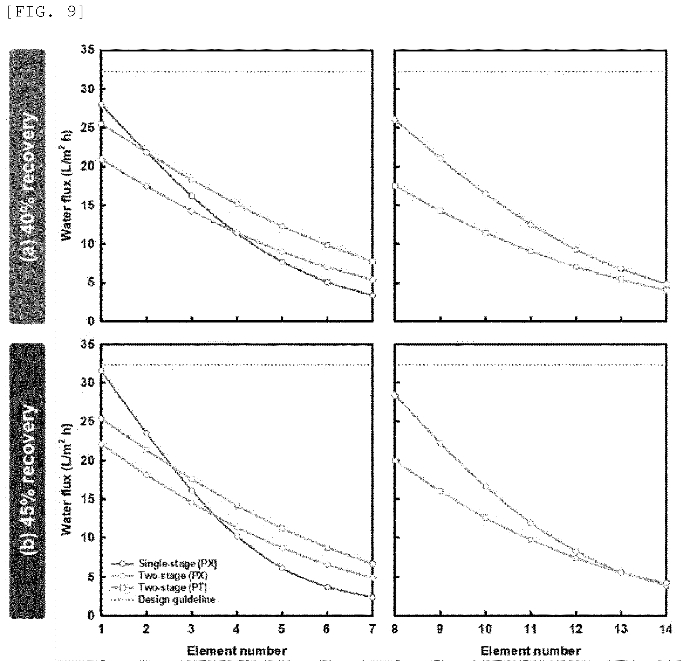

The two stage SWRO system 100, 100a can distribute more water permeation quantity compared to the single stage SWRO system 10. When the first element of the single stage SWRO system 10 operated with water permeation quantity of 27.99 L/m$^2$h at the recovery rate of 40%, the first element of the two stage SWRO system 110, 110a to which PX and PT were applied provided 20.93 L/m$^2$h and 25.53 L/m$^2$h, respectively (see Fig. 9(a)). Due to a low water permeation quantity at the first stage module 111, 111a, the remaining permeate water was produced at the second stage module 112, 112a. Regarding the two stage to which PX and PT was applied, water permeation quantity of the eighth element (the first element of the second stage) was 26.04 L/m$^2$h and 17.49 L/m$^2$h, respectively.

With the increase of the recovery rate, a large amount of permeate water was produced and much water permeation quantity was generated along PV. At the recovery rate of 45% (see Fig. 9(b)), water permeation quantity of 31.50 L/m$^2$h was observed at the first element and it was close to the limit of recommended water permeation quantity of 32.30 L/m$^2$h. Meanwhile, water permeation quantity at the first element was 22.07 L/m$^2$h and 25.37 L/m$^2$h and water permeation quantity at the eighth element of the two stage to which PX and PT were applied was 28.41 L/m$^2$h and 19.97 L/m$^2$h. SWRO system operated with high water permeation quantity at the high recovery rate and the two stage SWRO was more appropriate at the high recovery rate, which was caused by the distribution of water permeation quantity and this is because the distribution of water permeation quantity contributes the reduction of fouling. Similarly, Voutchkov's paper "Desalination engineering: planning and design (New York, McGraw Hill 531 Professional, 2012.)" recites that the two stage SWRO system 100, 100a can be used to form low fouling of the first stage module 111 when the inflow water keeps high concentration of foulant.

As long as the average water permeation quantity of the entire SWRO system does not change, the permeation quality remained the same regardless of RO design. Even though the average water permeation quantity was the same for the entire SWRO system, each stage of the two stage SWRO system 100, 100a operated with different average water permeation quantity. In particular, in the two stage SWRO system 100a to which PT was applied, the difference of the average water permeation quantity between stages was higher than that of the two stage SWRO system 100 to which PX was applied at the low recovery condition, which was a burden to the first stage module 111. However, high average water permeation quantity does not always mean that the water permeation quantity is high at the first element of each stage. Rather, the first element at the single SWRO system 10 provided higher water permeation quantity. That is, the two stage SWRO system 100, 100a has advantages from the water permeation quantity distribution.

In general, the two stage SWRO system 100, 100a is designed to have a ratio of 2:1 as described above, which means that the ratio of the number of PV of the first stage module 111 to the number of PV of the second stage module 112 is 2:1. Generally, the ratio of the permeated water quantity produced from the first stage module 111 to the permeated water quantity produced from the second module 112 is 2:1. This is because the two stage SWRO system 100, 100a is used by generally mounting the single stage SWRO system 10 operating with the recovery rate of 40% on the first stage and because the entire recovery rate of the plant is increased to 60% by mounting the second stage module 112 having an additional recovery rate of 20%.

However, the ratio by the optimal design which minimizes SEC and increases the recovery rate is not 2:1, which will be described in the below in detail.

For two stage SWRO system 100, 100a, more PVs were installed in the second stage module 112 when the SWRO system is equipped with PX, while in the first stage module 111a when with PT.

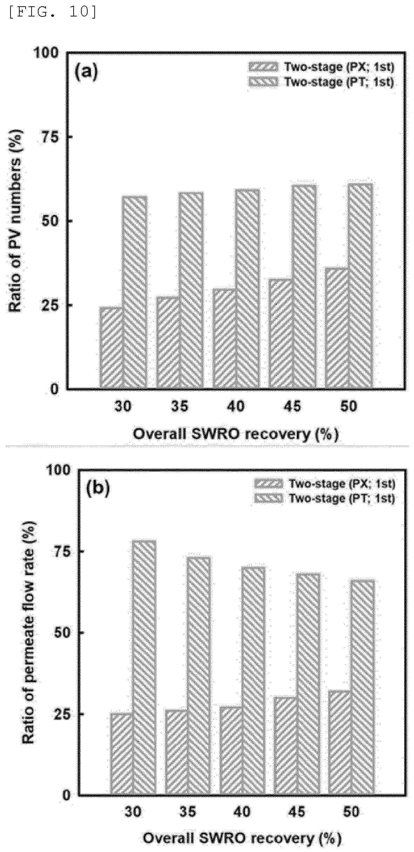

In the two stage SWRO system 100 to which PX is applied, the first stage module 111 has 24% to 36% of the entire PV, resulting in that the entire SWRO recovery rate increased from 30% to 50% (see Fig. 10(a)). Therefore, for the two stage SWRO system 100 to which PX is applied, i.e., the desalination apparatus 100 for high-saline water according to the first embodiment of the present invention, the ratio of the number of PV is 24:76 to 36:64 (=6:19 to 9:16) and more PVs are installed in the second stage module 112.

In contrast, the first stage module 111a of the two stage SWRO system 100a to which PT is applied has 57% to 61% of the entire PV in the range of recovery rate of 30% to 50% and the ratio of the number of PV is 57:43 to 61:39. Additional PVs were installed in the second stage module 112a instead of the first stage module 111a together with the increase of SWRO recovery rate. Overall, 2:1 which is the ratio of the number of PV is not an optimal ratio and varied according to SWRO recovery rate and ERD (Energy recovery device).

The first stage module 111a and the second stage module 112a produced different amount of permeated water and the use of different ERD affected permeate flow rate. When PX was applied to the two stage SWRO system 100, 100a as ERD, in accordance with the SWRO recovery rate of 30% to 50%, 25% to 32% of the entire SWRO permeated water was produced by the first stage module 111 and the remaining 75% to 68% of the target of the permeated water was produced by the second stage module 112 (see Fig. 10(b)). Permeate flow rate was 25:75 to 32:68 (= 1:3 to 8:17) and the second stage module 112 provides production of more amount of permeated water.

Meanwhile, the first stage module 111a of the two stage SWRO system 100a to which PT was applied produced less amount of permeated water (78% to 63%) together with the increase of the recovery rate (30% to 50%). But, more permeate flow rate was obtained by the first stage module than by the second stage module 112a. The permeate flow rate of the first stage module 111a to the second stage module 112a was 78:22 to 63:27 (=39:11 to 7:3).

Accordingly, the two stage SWRO system 100 to which PX is applied is a design in which more load is applied to the second stage module 112, and the two stage SWRO system 100a to which PT is applied is a design in which more load is applied to the first stage module 111a.

As described above, the two stage SWRO system 100, 110a is able to distribute more amount of water permeation quantity than the single stage SWRO system 10, but does not have advantages in terms of SEC in the entire SWRO range of the recovery rate of less than 50%. However, SEC of the two stage SWRO system 100, 100a and the single stage SWRO system 10 are similar to each other at the recovery rate of 50% (see Fig. 7(b)) and further experiment for SEC was performed at the recovery rate of more than 50%.

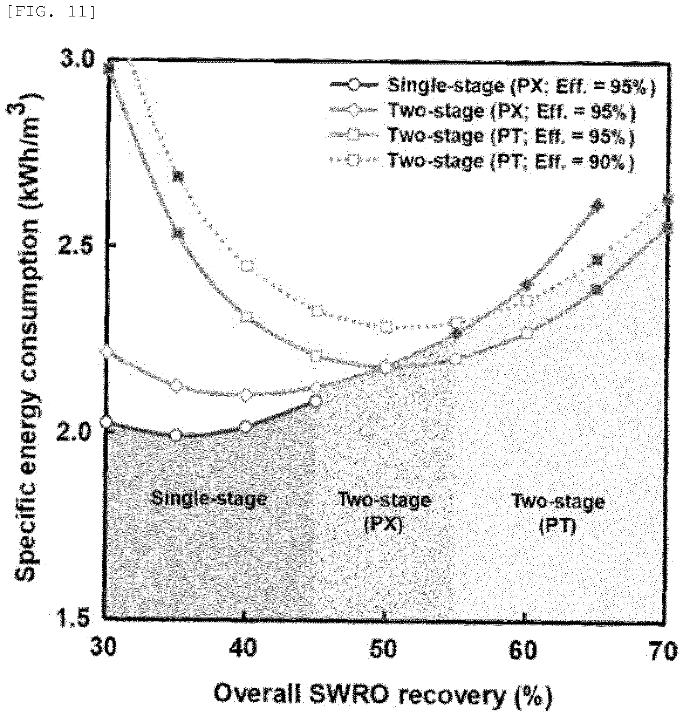

When the recovery rate is more that 50%, the two stage SWRO system 100, 100a has higher efficiency of energy than the single stage SWRO system 10. In Fig. 11, SEC of the single stage SWRO system 10 and the two stage SWRO system 100, 100a is provided at the recovery rate of 30% to 70%.

As shown in Fig. 7(b), the single stage SWRO system 10 consumed less energy than the two stage SWRO system 100, 100a. At the above recovery rate, hydraulic pressure cannot exceed osmotic pressure and the increase rate of osmotic pressure is higher than the increase rate of hydraulic pressure. Therefore, it is preferable that only the two stage SWRO system 100, 100a is applied to produce fresh water at the recovery rate of more than 50%.

Therefore, as described above, the desalination apparatus 100 for high-saline according to the first embodiment of the present invention operates such that the entire recovery rate is set in the rage of 45% to 55% and the desalination apparatus 100a for high-saline according to the second embodiment of the present invention is configured to operate at the recovery rate in the rage of 55% to 70%.

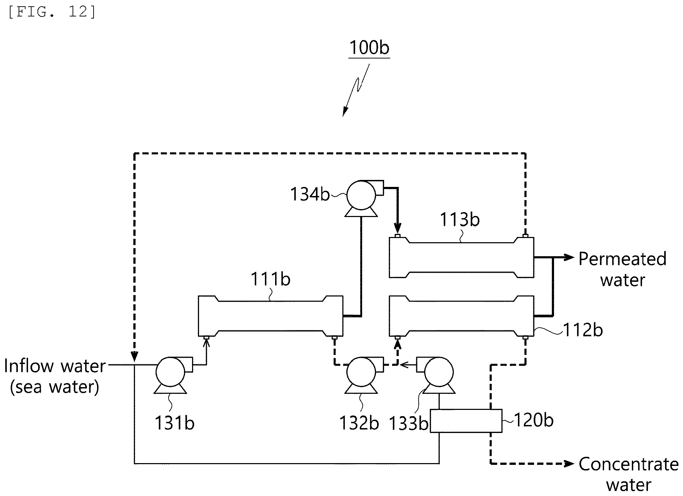

Meanwhile, Fig. 12 shows configuration of a desalination apparatus 100b for high-saline according to the third embodiment of the present invention. The desalination apparatus 100b for high-saline according to the third embodiment of the present invention is modified from the first embodiment and may include a first stage module 111b, a second stage module 112b, a pressure exchanger 120b, and a third stage module 113b.

Here, the first stage module 111b, the second stage module 112b and the pressure exchanger 120b correspond to those of the first embodiment and thus, they will be not described in detail.

A first product water produced by the first stage module 111b is introduced into the third stage module 113b as a third inflow water. Then, the third stage module 113b performs a reverse osmosis for the third inflow water and discharges a third product water and a third concentrate water. Therefore, a final product water of the desalination apparatus 100b for high-saline according to the third embodiment of the present invention is a second product water and a third product water. Here, for example, BWRO (Brackish Water Reverse Osmosis) is applied to the third stage module 113b of the third embodiment of the present invention.

As such, the third stage module 113b performs reverse osmosis for the first product water produced by the first stage module 111b one more time, which results in the decrease of salinity of the final product water and the increase of the product water quality.

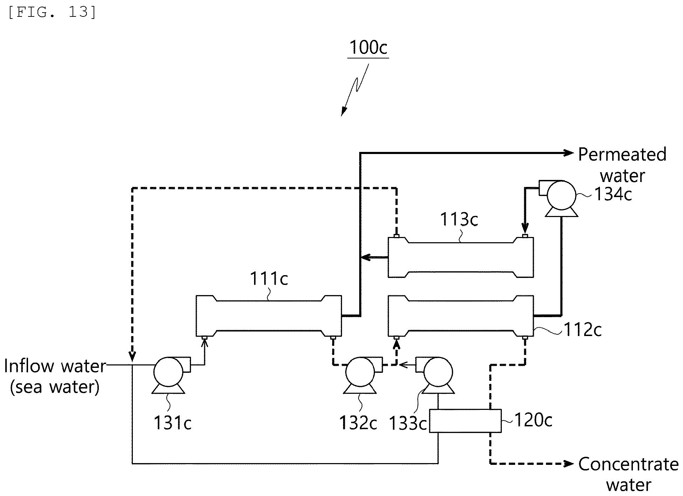

Meanwhile, Fig. 13 shows configuration of a desalination apparatus 100c for high-saline according to the fourth embodiment of the present invention. The desalination apparatus 100c for high-saline according to the fourth embodiment of the present invention is modified from the first embodiment and may include a first stage module 111c, a second stage module 112c, a pressure exchanger 120c, and a third stage module 113c.

Here, the first stage module 111c, the second stage module 112c and the pressure exchanger 120c correspond to those of the first embodiment and thus, they will be not described in detail.

A second product water produced by the second stage module 112c is introduced into the third stage module 113c as a third inflow water. Then, the third stage module 113c performs a reverse osmosis for the third inflow water and discharges a third product water and a third concentrate water. Therefore, a final product water of the desalination apparatus 100c for high-saline according to the fourth embodiment of the present invention is a first product water and a third product water. Here, for example, BWRO (Brackish Water Reverse Osmosis) is applied to the third stage module 113c of the fourth embodiment of the present invention

As such, the third stage module 113c performs reverse osmosis for the second product water produced by the second stage module 112c one more time, which results in the decrease of salinity of the final product water and the increase of the product water quality.

Here, the ratio of pressure vessel and the range of the recovery rate in the third and fourth embodiments correspond to those of the first embodiment. Also, in the third and fourth embodiments, the third concentrate water discharged from the third stage module 113b, 113c is mixed with raw water to dilute the raw water, resulting in the overall reduction of process load.

The above descriptions are intended to exemplarily explain the technical spirit of the present invention and those skilled in the art easily can modify and change the invention without departing from the essential features. Therefore, the embodiments are intended to exemplarily explain the technical idea or spirit of the present invention, not intended to limit it. The scope of technical idea or spirit is not limited by the embodiments. The scope of the present invention will be determined by attached claims and it should be construed that the scope of the present invention includes all technical spirit and idea of the claims and their equivalents.

[explanation of reference number]

    100,100a,100b,100c: desalination apparatus for high-saline water
    110,110a,110b,110c: first stage module
    112,112a,112b,112c: second stage module
    120,120b,120c: pressure exchanger
    120a: Pelton turbine
    131,131a,131b,131c: high pressure pump
    113b,113c: third stage module

**Claims**

1. A desalination apparatus for high-saline water comprising:

a first stage module into which raw water is introduced as a first inflow water and which treats the first inflow water by reverse osmosis process to discharge a first product water and a first concentrate water, a second stage module into which a second inflow water that is a mixture of the raw water and the first concentrate water is introduced and which treats the second inflow water by reverse osmosis process to discharge a second product water and a second concentrate water, and a pressure exchanger which increases pressure of the raw water that will be mixed with the first concentrate water by pressure of the second concentrate water, wherein a ratio of the number of pressure vessels constituting the first stage module to the number of pressure vessels constituting the second stage module is in the range of 6:19 to 9:16.

2. The desalination apparatus according to claim 1, wherein total recovery rate of the first stage module and the second stage module is set in a range of 45% to 55%.

3. The desalination apparatus according to claim 1, further comprising a third stage module into which the first product water is introduced as a third inflow water, the third stage module being configured to treats the third inflow water by a reverse osmosis process to discharge a third product water and a third concentrate water, wherein the second product water and the third product water are discharged as final product water.

4. The desalination apparatus according to claim 1, further comprising a third stage module into which the second product water is introduced as a third inflow water, the third stage module being configured to treat the third inflow water by a reverse osmosis process to discharge a third product water and a third concentrate water, wherein the first product water and the third product water are discharged as final product water.

5. The desalination apparatus according to claim 3 or 4, wherein the third concentrate water is mixed with the raw water to dilute the raw water.

6. The desalination apparatus according to claim 3 or 4, wherein brackish water reverse osmosis (BWRO) is applied to the third stage module.

7. The desalination apparatus for high-saline water comprising:

a first stage module into which raw water is introduced as a first inflow water and which treats the first inflow water by a reverse osmosis process to discharge a first product water and a first concentrate water, a second stage module into which the first concentrate water is introduced as a second inflow water and which treats the second inflow water by a reverse osmosis process to discharge a second product water and a second concentrate water, and a Pelton turbine which generates electric power by means of the second concentrate water, wherein a ratio of the number of pressure vessels constituting the first stage module to the number of pressure vessels constituting the second stage module is in the range of 57:43 to 61:39.

8. The desalination apparatus according to claim 7, wherein a total recovery rate of the first stage module and the second stage module is set in a range of 55% to 70%.

9. The desalination apparatus according to claim 1 or 7, wherein seawater reverse osmosis (SWRO) is applied to the first stage module and the second stage module.

10. The desalination apparatus according to claim 1 or 7, wherein the ratio of the number of pressure vessels constituting the first stage module to the number of pressure vessels constituting the second stage module is set depending on a predetermined total recovery rate of the first stage module and the second stage module.

[FIG. 1]

[FIG. 2]

[FIG. 3]

100a

111a 112a

Permeated
water

Inflow water
(sea water)

131a

132a

Concentrate
water

120a

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

Europäisches
Patentamt

European
Patent Office

Office européen
des brevets

# EUROPEAN SEARCH REPORT

Application Number

EP 20 20 4281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/280888 A1 (FUKUZAKI KOJI [JP] ET AL) 4 October 2018 (2018-10-04) | 1-6,9,10 | INV. C02F1/44 B01D61/02 B01D61/06 |
| A | * paragraphs [0029], [0038] - [0042], [0095] - [0098]; figures 1,7 * | 7,8 | |
| X | US 2009/090676 A1 (JOHNSON LEONARD [US]) 9 April 2009 (2009-04-09) | 7-10 | ADD. C02F103/08 |
| A | * paragraphs [0139], [0140]; figure 4 * | 1-6 | |
| A | US 2008/105617 A1 (OKLEJAS ELI [US]) 8 May 2008 (2008-05-08) * paragraph [0030]; figures 5,6 * | 1-10 | |
| A | KR 101 402 346 B1 (POSCO [KR]; POSCO ENG & CONSTR CO LTD [KR] ET AL.) 3 June 2014 (2014-06-03) * paragraphs [0031], [0032]; figure 1 * | 1-10 | |
| A | WO 2017/216785 A1 (DESALITECH LTD [IL]) 21 December 2017 (2017-12-21) * figures 4,5 * | 1-10 | |

TECHNICAL FIELDS
SEARCHED      (IPC)

C02F
B01D

The present search report has been drawn up for all claims

| Place of search | Date of completion of the search | Examiner |
|---|---|---|
| The Hague | 1 April 2021 | Du, Mingliu |

EPO FORM 1503 03.82 (P04C01)

**ANNEX TO THE EUROPEAN SEARCH REPORT
ON EUROPEAN PATENT APPLICATION NO.**

EP 20 20 4281

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2021

| Patent document cited in search report | | Publication date | Patent family member(s) | | Publication date |
|---|---|---|---|---|---|
| US 2018280888 | A1 | 04-10-2018 | JP<br>JP<br>US<br>ZA | 6762258 B2<br>2018171563 A<br>2018280888 A1<br>201802058 B | 30-09-2020<br>08-11-2018<br>04-10-2018<br>30-01-2019 |
| US 2009090676 | A1 | 09-04-2009 | US<br>WO | 2009090676 A1<br>2009045522 A1 | 09-04-2009<br>09-04-2009 |
| US 2008105617 | A1 | 08-05-2008 | NONE | | |
| KR 101402346 | B1 | 03-06-2014 | NONE | | |
| WO 2017216785 | A1 | 21-12-2017 | AU<br>EP<br>IL<br>WO | 2017285386 A1<br>3468922 A1<br>246233 A<br>2017216785 A1 | 24-01-2019<br>17-04-2019<br>31-03-2020<br>21-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200039573

- KR 101853214

**Non-patent literature cited in the description**

- Voutchkov's paper "Desalination engineering: planning and design. McGraw Hill, 2012, vol. 531